(19) 

Europäisches
Patentamt
European
Patent Office
Office européen
des brevets

(11) **EP 2 244 397 A1**

(12) **EUROPEAN PATENT APPLICATION**
published in accordance with Art. 153(4) EPC

| | |
|---|---|
| (43) Date of publication:<br>**27.10.2010 Bulletin 2010/43** | (51) Int Cl.:<br>*H04J 11/00* *(2006.01)* |
| (21) Application number: **08871505.7** | (86) International application number:<br>**PCT/ES2008/000734** |
| (22) Date of filing: **24.11.2008** | (87) International publication number:<br>**WO 2009/092828 (30.07.2009 Gazette 2009/31)** |

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(30) Priority: **24.01.2008 ES 200800188**<br><br>(71) Applicant: **GCM Communications**<br>**28805 Alcala de Henares Madrid (ES)** | (72) Inventor: **Diaz Fuente Vicente**<br>**28805 Alcala de Henares**<br>**Madrid (ES)**<br><br>(74) Representative: **Barnfather, Karl Jon et al**<br>**Withers & Rogers LLP**<br>**Goldings House**<br>**2 Hays Lane**<br>**London SE1 2HW (GB)** |

(54) **ENCODING AND DECODING METHOD AND APPARATUS FOR REDUCING INTERFERENCE IN SIMULTANEOUS SIGNAL TRANSMISSION SYSTEMS AND MULTIUSER SYSTEMS**

(57)   Encoding and decoding method and apparatus for reducing interference in simultaneous signal transmission systems and multiuser systems sharing the same or adjacent frequencies, reducing diaphony between them and increasing the capacity of communication networks. To encode in various bands, it uses the information from a conventional communication channel.

This method makes it possible to obtain zero or very low MAI, by exploiting the orthogonality of families of complementary sequences. In reception, use is made of a filter array corresponding to the conjugate of each of the sequences convoluted by the same filter array in transmission so that the sum of the outputs thereof makes it possible to extract in reception the information from the user selected without interference from other users.

**Fig. 1**

EP 2 244 397 A1

**Description**

**INVENTION PURPOSE**

The invention referred herein is about a coding and decoding method and device for reducing interferences in simultaneous signal transmission and multiple-user systems. This method enables the reduction of crosstalk or interference in multi-access communication systems based on any means of transmission or image capture through simultaneously coded impulse transmission.

**FIELD OF INVENTION**

This invention is developed in several fields due to the wide spectrum of use of this technology. By way of example but without limitation, we shall mention the use of this invention in the field of the audiovisual industry, especially, in the telecommunication industry. However, this technology is likewise useful in the military and civil field as for instance in radar or sonar device communications. Another example of the relevance and versatility of this technology is its use in medical diagnostic devices based on images, such as magnetic resonance imaging and ultrasound.

**BACKGROUND ART**

In most communication systems, the spectrum is limited and must be shared by a number of users.
There are several spectrum sharing systems: by means of frequency division (OFDM, DMT, etc.), Frequency Hopping (FH), Code Division Multiple Access (CDMA), Wavelength Division Multiplexing (WDM), and their combinations.
For the last years, several studies and researches have been focused on the possibility of reusing the spectrum or, at least, interfering as less as possible. All of them try to obtain the maximum spectrum efficiency and, therefore, the best use of the transmission channel while enabling the simultaneous transmission of signals without mutual interference.
One of the biggest problems is the interference among users in current and future mobile telephony systems. The system based on code division or CDMA is a system that is based on low cross-correlation properties of different sequences used by different subscribers. Due to the fact that said cross-correlation is not null, there is interference resulted from the simultaneous access of several users called MAI (Multi-Access Interference), which prevents from increasing the number of subscribers above the limit related to said interference.
On the other hand, low correlation properties are not met when there is a power difference transmitted among several subscribers; that is why the network should be able to control the power transmitted by each subscriber in order to ensure MAI interference is as less as possible. The evolution of mobile telephony set out by the European Consortium 3GPP tends to the use of various technologies, among which the multiple access is suggested by means of frequency division and using OFDM (Orthogonal Frequency Division Multiplexing).
Moreover, the effect of sharing the same frequency band among subscribers or services is particularly harmful to xDSL cable broadband access systems, where the Far End Crosstalk (FEXT) makes that, when the number of subscribers sharing the same cable of pairs increases, there is a decrease in the speed of data capable of transmitting for each subscriber at a specific distance. This effect may be significant and reduce the coverage for a specific service up to 50% for medium speeds in relation to 12Mbps, and getting to 2500% in the case of 20Mbps speeds, passing from 1Km to 200m of coverage radius.
The coding of different carriers by using complementary sequence sets has already been proposed in several studies such as the one published by Hsiao-Hwa Chen et al in ["A Multicarrier CDMA Architecture Based on Orthogonal Complementary Codes for New Generations of Wideband Wireless Communications," IEEE Communications Magazine, Oct. 2001, pp. 126-135].
Another approach to the same solution is proposed by Zao Ying et al in ["Complex Orthogonal Spreading Sequences Using Mutually Orthogonal Complementary Sets," MILKON International conference, 2006. 22-24 May, pp. 622-625]. Complementary sequences are used in such a way that each sequence and carrier requires four phases. Both methods are identical, except for small modifications as regards sequences employed.
Finally, there is a reference to Shu-Ming Tseng's work ["Asynchronous Multicarrier DS-CDMA Using Mutually Orthogonal Complementary Sets of Sequences," IEEE Trans. On Comm., Vol. 48, No. 1, Jan 2000, pp. 53-59], where the same procedures of modulation and demodulation are repeated in relation to the previous ones with slight modifications.
One of the inconveniences of all previous implementations is that the maximum spectrum efficiency is 1 bit/s/Hz. That efficiency proves to be very low when it is used in high-capacity communication systems like current ones, which vary from 3bps/Hz in radio systems to 12 bits/s/Hz in xDSL.
Moreover, those technologies are exclusively designed for CDMA-based systems; that is why they cannot be used by any other communication system to reduce interference among subscribers. Besides, the output signal bandwidth is greater than the basic signal bandwidth. Thus, it is necessary to completely modify current systems' transmission and reception phases in order to integrate said technologies.

All this leads to the deduction that a technology capable of emitting information efficiently and reducing interference among subscribers or services using the same frequency band is needed, while respecting the bandwidth parameters and power transmitted, regardless of the way of modulating data in basic band, be it OFDM, CDMA, QAM, WDM or other variant of them.

This technology shall be used in any system that requires independence or orthogonalization of information channels with each other without modifying neither transmission spectrum nor power transmitted. Among evident applications, we shall mention the reduction of crosstalk among simultaneous subscribers of xDSL services, the increase in the number of subscribers per cell in mobile telephony systems, the increase of fiber optic cable capacity using different wavelengths or RADAR or SONAR signal orthogonalization, and the generation of medical images, among others.

Neither background art nor patents or models with similar features to the ones proclaimed herein are known.

## INVENTION DISCLOSURE

The invention referred herein is based on using M complementary sequences sets. Complementary means that the sum of their autocorrelation results in the Kronecker's delta.

Besides, the value of M also matches the number of complementary sequences sets that are orthogonal among each other.

Orthogonal means that the sum of the cross-correlation of each complementary sequence set is zero.

These two properties are used in this patent to obtain the desired results. In the specific case of pairs (M=2) of orthogonal sequences, they are called Golay sequences, paying tribute to its discoverer.

The main property of sequences used in this invention is that they have an ideal autocorrelation feature, that is, it corresponds to a perfect Kronecker's delta without lateral lobules, and a mutual null cross-correlation among the families in an orthogonal sequence set.

For the proper implementation of the result, the system comprises two well-defined blocks:

    a.- coding system in transmission, and
    b.- decoding system in reception.

The method is as follows:

    The **transmission system** of M simultaneous users is in charge of:

    ■ Filtering the signal of each user with the corresponding filter bank to selected sequences for each user, ensuring the orthogonalization property among them according to the explanations presented above.
    ■ Adding each of the signals obtained from each user to the process output and sending them to the transmission means through a radiofrequency phase.
    ■ Modulating and transmitting signals by means of one or various antennas.

The **reception system** of a user i is in charge of:

    ■ Demodulating and equalizing signal received from the antenna.

    ■ Filtering signal obtained with the band-pass filter bank corresponding to the selected sequences for said user in the transmission.

    ■ Adding each of the signals obtained from the output of said filter bank to obtain the user's original signal free from other users' interference.

The appropriate employment of this process enables to totally cancel interferences.

## BRIEF DESCRIPTION OF DRAWINGS

First, we relate the elements comprising the drawings taking into account that identical references refer to identical elements.

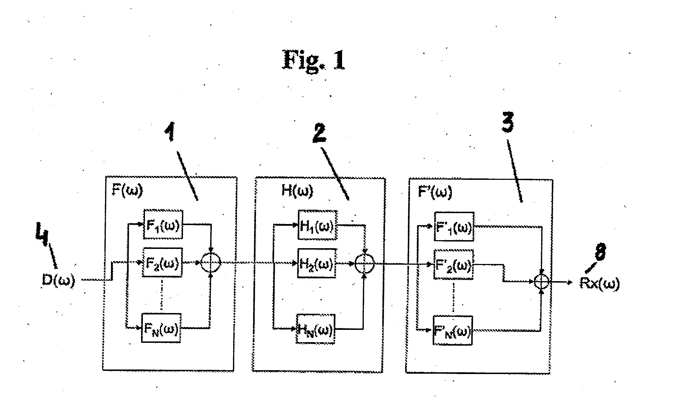

**Figure 1** shows the block diagram of a coding system for only one user.

**-1- F(ω)** consists of a band-pass filter bank adapted to the set of complementary sequences selected for said user.

**-2- H(ω)** corresponds to the channel between the transmitter and receiver point that can be modulated as the sum of N independent band-pass filters.

**-3- F'(ω)** consists of a band-pass filter bank adapted to the same set of:

**-4- $D_1(\omega)$, $D_2(\omega)$... $D_M(\omega)$** correspond to the different data flow signals that are to be transmitted simultaneously.

**-5- FA(ω), FB(ω) ...FM(ω)** correspond to the band-pass filter banks adapted to the families of orthogonal sequences used by each user in order to orthogonalize when receiving data from each of them in relation to the remaining flows.

**-6- H(ω)** Similar to -2-, corresponds to the means of transmission.

**-7- $F'_A(\omega)$, $F'_B(\omega)$... $F'_M(\omega)$** correspond to the band-pass filter banks adapted to the families of orthogonal sequences used in the transmission by each user to orthogonalize when receiving data from each of them in relation to the remaining flows.

**-8- $Rx_1(\omega)$, $Rx_2(\omega)$... $Rx_M(\omega)$** correspond to signals retrieved by each user without mutual interference.

In order to better understand the invention, three sheets of drawings are attached, where the following is distinguished:

**FIGURE 1**

It presents the block diagram of a coding system for only one user.

**FIGURE 2**

It presents the block diagram for M users that are transmitted and received independently.

**FIGURE 3**

It presents the sketch of an xDSL communication system using the technology described in this patent.

**PREFERRED EMBODIMENT OF THE INVENTION**

The invention proclaimed here comprises two independent applications for the same united result.

• - On the one hand, a method is claimed.
• - And on the other, a device.

For the embodiment of said method, a device for signal coding and decoding is required.
The method uses sets of M complementary sequences. Complementary means that the sum of their autocorrelations results in a Kronecker's delta.
Besides, the M value also matches the number of complementary sequence sets that are orthogonal with each other.
Orthogonal means that the sum of the cross-correlation of each complementary sequence set is zero.
These two properties are used in this patent to obtain the desired results. In the specific case of pairs (M=2) of orthogonal sequences, they are called Golay sequences, paying tribute to its discoverer.
The device, as a communication system, is comprised of three main blocks:
An encoder -1- and -5-, a decoder -3- and -7-, and a channel -2- and -6-.
The encoder system is in charge of convolving the basic band signal to be transmitted with a set of complementary sequences. The decoder, on the other hand, is in charge of correlating signals received with the same set of complementary sequences used in the emission and of adding the results in order to obtain the original spectrum.
The main property of sequences used in this invention is that they have an ideal autocorrelation feature, that is, it corresponds to a perfect Kronecker's delta without lateral lobules, and a mutual null cross-correlation among the families in an orthogonal sequence set, complying with:

$$\phi_{11}[n]+\phi_{22}[n]+\ldots+\phi_{MM}[n]=\sum_{i=1}^{M}\phi_{ii}[n]=\begin{cases}MN & ,n=0\\ 0 & ,n\neq 0\end{cases}$$

$$\sum_{i=1}^{M}\Phi_{ii}(\omega)=cte \quad ,\forall\omega \quad /\Phi_{ii}(\omega)=\Omega_{i}(\omega)\Omega_{i}^{*}(\omega)$$

$$\sum_{i=1}^{M}A_{i}(\omega)B_{i}^{*}(\omega)=0 \quad ,\forall\omega \quad /A\neq B$$

Where $\phi ii$ are the individual autocorrelations of each M complementary sequence selected with N-length, and $\phi$ and $\Omega_{i}$ are the response in frequency of autocorrelation and of complementary sequence **i** of the family $\Omega$ in the set of M-length orthogonal sequences in the bandwidth used, and * is the conjugated operator.

The generation of those sequences is performed based on the so-called basic kernel known up to date of 2, 10 and 26 bits (the rules of generation of complementary sequence families is discussed in the article titled "Complementary Sets of Sequences" by C.-C. Tseng and C. L. Liu, published in IEEE Trans. Inform. Theory, Vol. IT-18, No. 5, pp. 644-651, Sept. 1972).

In order to understand the technology, it is convenient to observe the process block diagram (figure 1). The information to be transmitted, represented by d[n], whose bandwidth is B, is processed by means of a band-pass filter bank, $F_1$ to $F_N$, which remove spectrum components from signals for transmission. The number of N bands will depend on the size of the complementary set of sequences used, and on the number of users or services you want to orthogonalize.

Taking into account that the function of channel transference in bandwidth frequency $B$ is:

$$H(\omega)=H_1(\omega)+H_2(\omega)+\ldots+H_N(\omega) \tag{5}$$

We will suppose that the bandwidth of each channel is $B/N$ in order to facilitate the process.

The signal received through the channel will correspond to the convolution of the input signal with the channel response or, which is similar, to the product of their spectra:

$$Rx(\omega)=D(\omega)\cdot H(\omega)=D(\omega)\cdot[H_1(\omega)+H_2(\omega)+\ldots+H_N(\omega)] \tag{6}$$

Where $F_1(\omega)$, $F_2(\omega)$... $F_N(\omega)$ are band-pass filters corresponding to frequency bands of channels 1, 2, ..., N and unity gain convolved by complementary sequences in the following way:

$$F_1(\omega)=\Omega_1(\omega)$$

$$F_2(\omega)=\Omega_2(\omega)$$

$$F_N(\omega) = \Omega_N(\omega) \tag{7}$$

Where $\Omega_i$ is the element i of set $\Omega$ within the complementary set of sequences (A, B, C, D, ...) of N elements meeting property (4) among them, as it is explained in the article by Tseng mentioned above. Based on the diagram of figure 1 and operating, we obtain the following expression:

$$Rx(\omega) = D(\omega) \cdot [F_1(\omega) H_1(\omega) F'_1(\omega) + F_2(\omega) H_2(\omega) F'_2(\omega) + ... + F_N(\omega) H_N(\omega) \quad F'_N(\omega)] \tag{8}$$

For expressions (8) and (6) be equaled, all channel responses should be identical and equal to the unit. This process is called equalization and may be achieved through a variety of conventional processes.

Therefore, in basic band, we will suppose that channels have been previously equalized to this process, obtaining, finally, this expression:

$$Rx(\omega) = D(\omega) \cdot [F_1(\omega) F'_1(\omega) + F_2(\omega) F'_2(\omega) + ... + F_N(\omega) F'_N(\omega)] \tag{9}$$

Where $F_1(\omega) F_2(\omega) ... F_N(\omega)$ are band-pass filters corresponding to frequency bands of channels 1, 2, ..., N and unity gain convolved by complementary sequences in the following way:

$$F_1(\omega) = \Omega^*_1(\omega)$$
$$F_2(\omega) = \Omega^*_2(\omega)$$
$$... \tag{10}$$
$$F_N(\omega) = \Omega^*_N(\omega)$$

Where * is the conjugated operator.

Replacing in (9) and applying the property of complementary set of sequences (4), it is proved that:

$$Rx(\omega) = D(\omega) \cdot cte \tag{11}$$

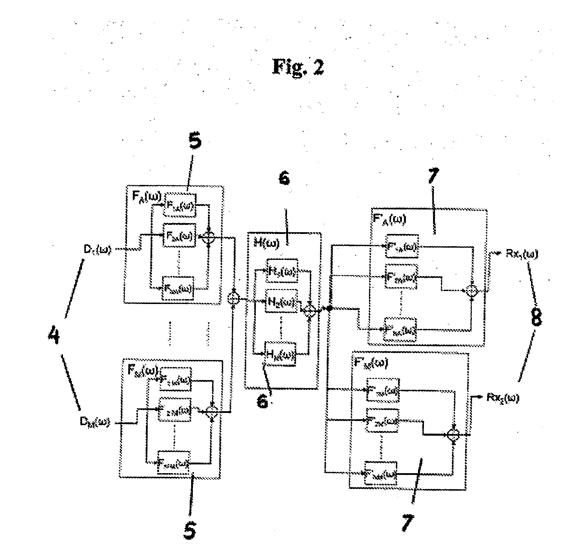

From this result, and based on figure 2, in a communication system shared by M users, $D_1(\omega)$, $D_2(\omega)$... $D_M(\omega)$ where there is one channel for all of them, the objective is to comply with this equation:

$$Rx(\omega) = [D_1(\omega) + D_2(\omega) + ... + D_M(\omega)] \cdot [H_1(\omega) + H_2(\omega) + ... + H_N(\omega)] \tag{12}$$

In that way, all users are independent from each other. If a set of complementary sequences from a family of orthogonal sequences is assigned to each user, it will be proved that they are independent and that they can be retrieved without mutual interference. As regards clarity, it will be proved with a pair of users using an orthogonal set, among them A and M. In that way, equation (12), assuming channel equalization and replacing (7) and (10) in (9), and eliminating variable ω by simplicity, results in:

$$Rx= Rx_1+ Rx_2 = D_1 \cdot [\ A_1A^*_1+ A_2A^*_2+...+ A_NA^*_N]\ + D_1[\ A_1B^*_1+ A_2B^*_2+...+ A_NB^*_N]\ + \\ + D_1 \cdot [\ B_1A^*_1+ B_2A^*_2+...+ B_NA^*_N]\ + D_2[\ B_1B^*_1+ B_2B^*_2+...+ B_NB^*_N] \quad (13)$$

Due to the properties of the sets of families of orthogonal complementary sequences, cross terms of (13) are null and the resulting expression is as follows:

$$Rx= Rx_1+ Rx_2 = D_1 \cdot [\ A_1A^*_1+ A_2A^*_2+...+ A_NA^*_N]\ + D_2 \cdot [B_1B^*_1+ B_2B^*_2+...+ B_NB^*_N] = \\ cte \cdot (D_1+D_2) \quad (14)$$

It can be showed that the previous process generalized for N users can be expressed as follows:

$$Rx = \sum_1^N Rx_i = cte \sum_1^N D_i \quad (15)$$

That is to say that the sum of signals received is equivalent to the sum of data transmitted, multiplied by a constant and without mutual interference. This means that users are orthogonal and independent.

In another embodiment of the invention, each user's channel may be different, as it is the case of some radio systems, satellites, and RADAR or xDSL systems. In this case, the channel model for two users is the following:

$$Rx(\omega)= D_1(\omega) \cdot [H1_1(\omega)+ H1_2(\omega)+...+ H1_N(\omega)]+ D_2(\omega) \cdot [H2_1(\omega)+ H2_2(\omega)+...+ \\ H2_N(\omega)] \quad (16)$$

Where $D_1$ is the transmitted signal, $D_2$ is the transmitted signal by the interfering source, H1 is the transference function of channel between the generation point of signal $D_1$ and the receiver, and H2 is the transference function from the generation point of signal $D_2$, or interfering user, and receiver 1.

In this case, where channels are not identical, it is necessary to independently equalize each channel H1, H2, ... corresponding to each user and interfering for the orthogonalization property to be met; however, the property is still useful for applications mentioned in this document though its complexity is greater.

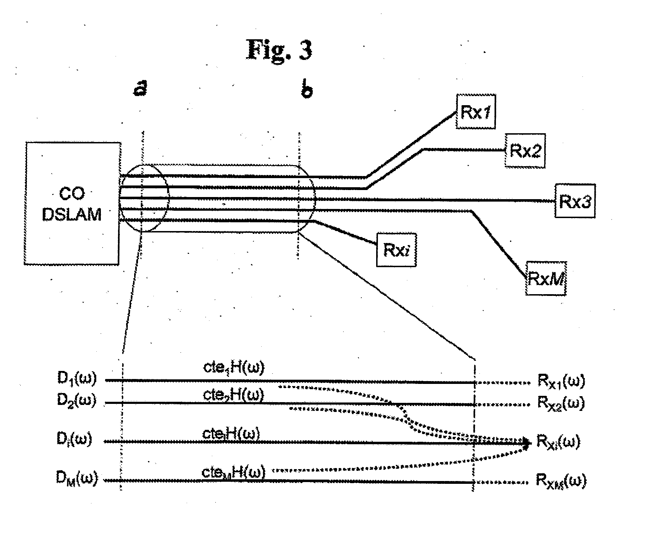

There are other cases where the transmission point of all users is the same, such as the downstream channel of a mobile telephony basic station towards subscribers, a satellite-Earth link, or xDSL channels. See figure 3. In these cases, channel H2 is approximately equal than H1 multiplied by a constant; thus, the signal in the receiver will be equal to the following expression:

$$Rx(\omega)= [cte_1 \cdot D_1(\omega)\ + cte_2 \cdot D_2(\omega)] \cdot [H_1(\omega)+ H_2(\omega)+...+ H_N(\omega)] \quad (17)$$

Where H1=H2=H and $cte_1$, $cte_2$ are constants. Thus, (17) mainly matches the expression (12) and, therefore, all users are orthogonal among each other once channel H is equalized in the receiver.

It should be highlighted that the signal emitted D has been considered to have modulation, power and bandwidth remaining unaffected in the orthogonalization process and independent of it, which represents a great advantage in front of the above mentioned proposals.

Moreover, we should consider that in the case of xDSL communications, (see figure 3 diagram) where the response of each pair inside the cable brings closer from point -a-of central origin (CO/DSLAM) to the reception point of user Rxi, point -b-, the response of each pair $H(\omega)$ inside the same cable is supposed to be approximately equal, except for a constant, and the interference or crosstalk coupling is produced in the reception point -b-. Therefore, signal corresponding to user -a- in the reception is interfered by the coupling of the signals of the remaining users sharing the cable in the point as described in the lower part of the drawing.

In conclusion, it can be stated that the advantages of this technology are, on the one hand, the capacity of building independent and orthogonal channels in time for different users using the same band of frequencies and, on the other, the ability to maintain elevated spectrum efficiencies regardless of the process described. Therefore, the invention described herein constitutes a powerful system of orthogonalization of channels, which improves current technologies using complementary codes increasing spectrum efficiency in communication systems, or increasing the amount of information obtained in RADAR, SONAR, or medical imaging systems.

**Claims**

1. st. - CODING AND DECODING METHOD AND DEVICE FOR REDUCING INTERFERENCES IN SIMULTANEOUS SIGNAL TRANSMISSION AND MULTIPLE-USER SYSTEMS, mainly **characterized by** a method that is comprised of each user's spectrum divided in smaller bands through band-pass filter -3- convolved or adapted by sequences corresponding to families of complementary sequences sets, whose cross-correlation is null among the subsets of those families, and that are assigned to each user being orthogonal among each other, and where the method uses sets of M complementary sequences. Complementary means that the sum of their autocorrelations result in a Kronecker's delta, and where the value of M also matches the number of sets of complementary sequences - which are orthogonal among each other - i.e. that the sum of cross-correlations of the complementary sequences of each set is zero. Besides, the signal emitted -4- has modulation, power and bandwidth remaining unaffected in the process of orthogonalization and it is independent of it.

2. nd. - CODING AND DECODING METHOD AND DEVICE FOR REDUCING INTERFERENCES IN SIMULTANEOUS SIGNAL TRANSMISSION AND MULTIPLE-USER SYSTEMS, according to claim 1 and **characterized by** the fact that the system is comprised of three distinctive blocks for the appropriate implementation of the method:

    . - coding system in transmission, and
    . - decoding system in reception.
    . - channel between the transmission and reception system.

    Whose functioning is the following:

    The **transmission system** of M simultaneous users is in charge of:

        Filtering the signal of each user -4- with the corresponding filter bank -5- to selected sequences for each user, ensuring the orthogonalization property.
        Adding each of the signals obtained from each user to the process output and sending them to the transmission means through a radiofrequency phase.
        Modulating and transmitting signals by means of one or various transmission elements.

    The **reception system of** M users is in charge of:

        Demodulating and equalizing signal received from one or various receiving elements.
        Filtering signal obtained with the band-pass filter bank -7-corresponding to the selected sequences for said user.
        Adding each of the signals obtained from said filter bank outputs to obtain the user's original signal free from other users' interference.

3. rd. - CODING AND DECODING METHOD AND DEVICE FOR REDUCING INTERFERENCES IN SIMULTANEOUS SIGNAL TRANSMISSION AND MULTIPLE-USER SYSTEMS, according to claim 1 and **characterized by** the fact that when the channel of each user is different, the channel model is as follows

$$Rx(\omega) = D_1(\omega) \cdot [H1_1(\omega) + H1_2(\omega) + \ldots + H1_N(\omega)] +$$
$$D_2(\omega) \cdot [H2_1(\omega) + H2_2(\omega) + \ldots + H2_N(\omega)] \qquad\qquad (16)$$

Where $D_1$ is the transmitted signal, $D_2$ is the transmitted signal by the interfering source, H1 is the transference function of channel between the generation point of signal D1 and the receiver, and H2 is the transference function from the generation point of signal D2, or interfering user, and receiver 1.

4. th. - CODING AND DECODING METHOD AND DEVICE FOR REDUCING INTERFERENCES IN SIMULTANEOUS SIGNAL TRANSMISSION AND MULTIPLE-USER SYSTEMS, **characterized by** the fact that the device, as a communication system, is comprised of three main blocks:

   -5- coding device;
   -7- decoding device; and
   -6- channel between -5- and -7-

5. th. - ZCODING AND DECODING METHOD AND DEVICE FOR REDUCING INTERFERENCES IN SIMULTANEOUS SIGNAL TRANSMISSION AND MULTIPLE-USER SYSTEMS, according to claim 4 and **characterized by** the fact that the coding device -5- enables the division of the signal's spectrum to be emitted in different bands by means of band-pass filters, whose construction is made through the convolution of each of the elements of the set of complementary sequences with the responses of each band-pass filter adapted to the frequency or work band of said filter.

6. th. - CODING AND DECODING METHOD AND DEVICE FOR REDUCING INTERFERENCES IN SIMULTANEOUS SIGNAL TRANSMISSION AND MULTIPLE-USER SYSTEMS, according to claims 4 and 5 and **characterized by** the fact that the coding device uses a set of filters where the sum of frequency bands of each one covers the entire spectrum of the signal to be emitted or part of it.

7. th. - CODING AND DECODING METHOD AND DEVICE FOR REDUCING INTERFERENCES IN SIMULTANEOUS SIGNAL TRANSMISSION AND MULTIPLE-USER SYSTEMS, according to claim 4 and **characterized by** the fact that the decoding device enables the division of the spectrum of the signal received in different bands by means of band-pass filters, whose construction is made through the convolution between complementary sequences conjugated used and the response or a band-pass filter adapted to the frequency or work band of said filter. Besides, the sum of frequency bands of each one covers the entire spectrum of the emitted and/or received signal, or part of it, and where the sum of all filters' outputs results in the decoded signal -8-.

8. th. - CODING AND DECODING METHOD AND DEVICE FOR REDUCING INTERFERENCES IN SIMULTANEOUS SIGNAL TRANSMISSION AND MULTIPLE-USER SYSTEMS, according to claim 4 and **characterized by** the fact that channel -6- is the same for all, and the following equation is complied with:

$$Rx(\omega) = [D_1(\omega) + D_2(\omega) + \ldots + D_M(\omega)] \cdot [H_1(\omega) + H_2(\omega) + \ldots + H_N(\omega)]$$

9. th. - CODING AND DECODING METHOD AND DEVICE FOR REDUCING INTERFERENCES IN SIMULTANEOUS SIGNAL TRANSMISSION AND MULTIPLE-USER SYSTEMS, according to previous claims and **characterized by** the fact that the families of sets of complementary sequences used are of any length.

## Fig. 1

## Fig. 2

# Fig. 3

# INTERNATIONAL SEARCH REPORT

| | |
|---|---|
| International application No. | |
| PCT/ ES 2008/000734 | |

## A. CLASSIFICATION OF SUBJECT MATTER

**H04J 11/00** (2006.01)

According to International Patent Classification (IPC) or to both national classification and IPC

## B. FIELDS SEARCHED

Minimum documentation searched (classification system followed by classification symbols)

H04J

Documentation searched other than minimum documentation to the extent that such documents are included in the fields searched

Electronic data base consulted during the international search (name of data base and, where practicable, search terms used)

INVENES, EPODOC, WPI, NPL, XPESP, XPAIP, XPI3E, INSPEC.

## C. DOCUMENTS CONSIDERED TO BE RELEVANT

| Category* | Citation of document, with indication, where appropriate, of the relevant passages | Relevant to claim No. |
|---|---|---|
| A | Shu-Ming Tseng; Bell, M.R.. "Asynchronous multicarrier DS-CDMA using mutually orthogonal complementary sets of sequences", communications, IEEE Transactions on Volume 48, Issue 1, Jan. 2000 Page(s):53 - 59 [on line][retrieved on 23.04.2009].<br>Retrieved from the internet:<br><URL:http://ieeexplore.ieee.org/stamp/stamp.jsp?tp=&arnumber=818873&isnumber=17738> | 1-9 |

☒ Further documents are listed in the continuation of Box C.       ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance.<br>"E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means<br>"P" document published prior to the international filing date but later than the priority date claimed | "Y" document of particular relevance; the claimed invention cannot be considered to involve an inventive step when the document is combined with one or more other documents , such combination being obvious to a person skilled in the art |
| | "&" document member of the same patent family |

| Date of the actual completion of the international search | Date of mailing of the international search report |
|---|---|
| 06 May 2009       (06.05.2009) | **(12/05/2009)** |
| Name and mailing address of the ISA/<br>O.E.P.M.<br><br>Paseo de la Castellana, 75 28071 Madrid, España.<br>Facsimile No.   34 91 3495304 | Authorized officer<br>J. Botella Maldonado<br><br>Telephone No. +34 91 349 53 82 |

Form PCT/ISA/210 (second sheet) (July 2008)

## INTERNATIONAL SEARCH REPORT

| | International application No. |
|---|---|
| | PCT/ES 2008/000734 |

| C (continuation). | DOCUMENTS CONSIDERED TO BE RELEVANT | |
|---|---|---|
| Category* | Citation of documents, with indication, where appropriate, of the relevant passages | Relevant to claim No. |
| A | Prasad, K.V.; Darnell, M.. "Data transmission using complementary sequence sets", HF Radio Systems and Techniques, 1991., Fifth International Conference on 22-25 Jul 1991 Page(s):222 - 226 [online][retrieved on 23.04.2009]. Retrieved from the internet: <URL:http://ieeexplore.ieee.org/stamp/stamp. jsp?tp=&arnumber=175897&isnumber=4468> | 1-9 |
| A | Magaa, M.E.; Rajatasereekul, T.; Hank, D.; Hsiao- Hwa Chen. "Design of an MC-CDMA System That Uses Complete Complementary Orthogonal Spreading Codes", Vehicular Technology, IEEE Transactions on Volume 56, Issue 5, Part 2, Sept. 2007 Page(s):2976 - 2989 [online][retrieved on 23.04.2009]. Retrieved from the internet: <URL:http://ieeexplore.ieee.org/stamp/stamp. jsp?tp=&arnumber=4305522&isnumber=4305470> | 1-9 |

Form PCT/ISA/210 (continuation of second sheet) (July 2008)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **Hsiao-Hwa Chen et al.** A Multicarrier CDMA Architecture Based on Orthogonal Complementary Codes for New Generations of Wideband Wireless Communications. *IEEE Communications Magazine,* October 2001, 126-135
- **Zao Ying et al.** Complex Orthogonal Spreading Sequences Using Mutually Orthogonal Complementary Sets. *MILKON International conference,* 22 May 2006, 622-625
- Asynchronous Multicarrier DS-CDMA Using Mutually Orthogonal Complementary Sets of Sequences. *IEEE Trans. On Comm.,* January 2000, vol. 48 (1), 53-59
- **C.-C. Tseng ; C. L. Liu.** Complementary Sets of Sequences. *IEEE Trans. Inform. Theory,* September 1972, vol. IT-18 (5), 644-651